# EUROPEAN PATENT APPLICATION

(11) **EP 3 021 212 A1**
(43) Date of publication of application: **18.05.2016**
(21) Application number: 14193531.2
(22) Date of filing: 17.11.2014
(51) Int. Cl.: G06F 3/14, G06F 1/26, G09G 5/00, H04L 12/10, H04L 12/40, H04L 12/931

(54) **Display device and display system**

(71) Applicant: Avalue Technology Inc., New Taipei City 235 (TW)
(72) Inventor: Hong, Wei-Chan, 235 Zhonghe Dist., New Taipei City (TW)
(74) Representative: 2K Patentanwälte Blasberg Kewitz & Reichel

(57) **Abstract**

The display system (2) comprising a host (20) and a display device (30) is provided. The display device (30) comprises a first transmission unit (32) and a display module (340). The first transmission unit (32) comprises a first network connection port (324), a first PoE module (322) and a first processor (320). The first network connection port (324) receives an Ethernet frame and an Ethernet power from the host (20). The first PoE module (322) processes the Ethernet power to provide a necessary power for making the display device (30) operate. The first processor (320) decapsulates the Ethernet frame into a first format data, and transfers the first format data to the display module (340). This application can effectively simplify the number of connection cable and increase the maximum transmission distance.

## Description

### BACKGROUND OF THE INVENTION

### Field of the Invention

The invention relates to a display device and a display system, and in particularly to a display device and a display system using PoE (Power over Ethernet).

### Description of Related Art

In the current society, it is an important issue to transmit the information fast. The most effective and most convenient way to transmit the information is to visualize and display the information on the display device of the display system.

In order to effectively provide the information of the different types, a variety of display systems are provided for the variety of purpose. Such as the indoor electronic signage system installed in the department stores or the malls for displaying the promotional information or the big size outdoor electronic signage system installed outdoor for displaying the real-time traffic status or advertising.

Furthermore, a display device having the ability of accessing an input operation (such as a touchscreen, a display device comprising the buttons or a display device comprising a card reader) had been provided.

Because the display system comprising above display device can interact with a user, the display system can be used to a lot of purposes, such as a multiple media kiosk (MMK) installed in the convenience store, an automated teller machine (ATM), a guide machine installed in the entrance of the building, and a healthcare information display system installed in a wards of a hospital or a physician diagnosis information display system installed in a clinic room of a hospital.

However, the display device and the host of the current display system are installed in the same place. Above installing way not only makes the management and the maintenance of the display systems become inconvenient (when the display systems are installed in the difference place respectively, the administer must to go the difference place for managing and maintaining the display systems respectively), but also increases the risk of the host installed in the open-plan space being damaged or stolen.

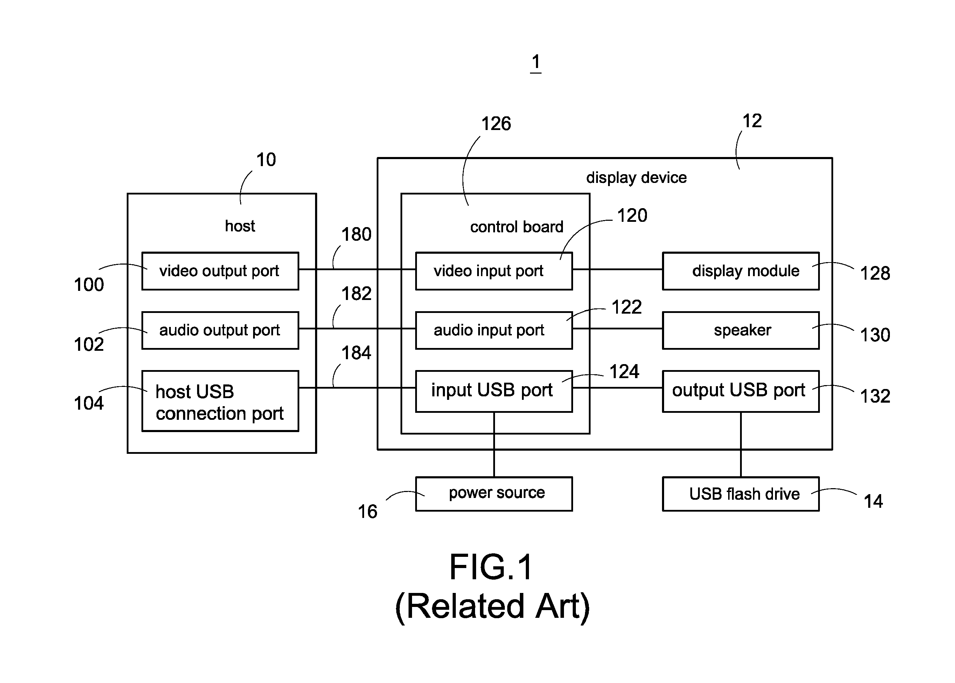

In order to solve the above problems, a related art display system is shown in Fig. 1.

Fig. 1 is an architecture diagram of a related art display system. As shown in Fig. 1, the related art display system1 comprises a host 10 and a display device 12, the host 10 and the display device 12 are separately installed in difference places. The host 10 comprises the basic elements (such as a CPU, a mother board, a memory, a power supply (not shown in the Fig 1) and so on) and a video output port 100, an audio output port 102 and a host USB (Universal Serial Bus) connection port 104. The display device 12 comprises a control board 126, a display module 128, a speaker130 and an output USB port 132.

The control board 126 comprises a video input port 120, an audio input port 122 electrically connected to the speaker 130 and an input USB port 124 electrically connected to the output USB port 132.

The host 10 and the display device 12 can be separately installed in difference places (for example, the host 10 can be installed in a regulatory region, such as a computer room or a guardhouse, and the display device 12 can be installed in an open-plan region, such as an entrance of the building or a sales area of a mall). The video output port 100 connects to the video input port 120 via a video transmission cable 180 to transfer a video data from the host 10 to the display module 128 of the display device 12 for displaying. The audio output port 102 connects to the audio input port 122 via an audio transmission cable 182 to transfer an audio data from the host 10 to the speaker 130 of the display device 12 for playback. The host USB connection port 104 connects to the input USB port 124 via an USB transmission cable 184 such that the host 10 can access a USB flash drive 14 connected to the output USB port 132. The control board 126 further externally connects to a power source 16 to receive a necessary power for making the display device 12 operate. Therefore, the display device 12 and the host 10 can be installed in the different places.

However, there are some problems descripted in the following description in the related art display system 1. (1) If we want to add a new transmission format (such as video, audio or USB) between the host 10 and the display device 12, we must add a transmission cable corresponding to the new transmission format between the host 10 and the display device 12. This problem not only increases the cost of installing the transmission cable, but also makes the connection cables between the host 10 and the display device 12 become complex and hard to manage. (2) The effective transmission distance of the general transmission cable is too short (for example, the effective transmission distance of the HDMI (High Definition Multimedia Interface) cable is only 5 meter). This problem makes the installing distance between the host 10 and the display device 12 too short. (3) The related art display device 12 must externally connect to the power source 16 to receive the necessary power for making the display device 12 operate. This problem make the installing place of display device 12 be restricted by the place of the power source 16.

### SUMMARY OF THE INVENTION

The object of the present invention is providing a display device and a display system using a network cable to transfer a data and a power simultaneously.

The present invention mainly provides a display device (30) comprising a display module (340) and a first transmission unit (32). The first transmission unit (32) comprises : a first network connection port (324) connected to a network cable (40) to receive at least one Ethernet frame and an Ethernet power; a first PoE module (322) electrically connected to the data connection port (324), the first PoE module (322) receiving and processing the Ethernet power to provide a necessary power for making the display device (30) operate; and a first processor (320) electrically connected to the first PoE module (322) and the display module (340) receiving and decapsulating the Ethernet frame into a first format data, and transferring the first format data to the display module (340) for displaying.

The present invention further provides a display system (2) comprises a display device (30) and a host (20). The display device (30) comprises a display module (340) and a first transmission unit (32). The first transmission unit (32) comprises a first network connection port (324) connected to a network cable (40) to receive at least one Ethernet frame and an Ethernet power; a first PoE module (322) electrically connected to the data connection port (324), the first PoE module (322) receiving and processing the Ethernet power to provide a necessary power for making the display device (30) operate; and a first processor (320) electrically connected to the first PoE module (322) and the display module (340) receiving and decapsulating the Ethernet frame into a first format data, and transferring the first format data to the display module (340) for displaying. The host (20) comprises a computer unit (24) and a second transmission unit (22). The computer unit (24) comprises an audio/video output module (242) outputting the first format data; a central processing unit (240) electrically connected to the audio/video output module (242) generating the first format data; and a power supply module (250) electrically connected to the central processing unit (240) providing a power. The second transmission unit (22) comprises a second processor (220) electrically connected to the audio/video output module (242) encapsulating the first format data into the Ethernet frame; a second network connection port (224) connecting the network cable (40) to transfer the Ethernet frame and the Ethernet power; and a second PoE module (222) electrically connected to second processor (220), the second network connection port (224) and the power supply module (250) generating the Ethernet power, and transferring the Ethernet frame and the Ethernet power to the display device (30) via the second network connection port (224) and the network cable (40).

The present invention can effectively simplify the number of connection cable, increase the maximum transmission distance, and operate without the external power supply via transferring the data and the power via the network cable simultaneously.

### BRIEF DESCRIPTION OF DRAWING

Fig. 1 is an architecture diagram of a related art display system.
Fig. 2A is a first architecture diagram of a display system of a first embodiment according to the present invention.
Fig. 2B is a second architecture diagram of a display system of a first embodiment according to the present invention.
Fig. 3 is an architecture diagram of a display system of a second embodiment according to the present invention.

### DETAILED DESCRIPTION OF THE INVENTION

In cooperation with the attached drawings, the technical contents and detailed description of the present invention are described thereinafter according to a preferable embodiment, being not used to limit its executing scope. Any equivalent variation and modification made according to appended claims is all covered by the claims claimed by the present invention.

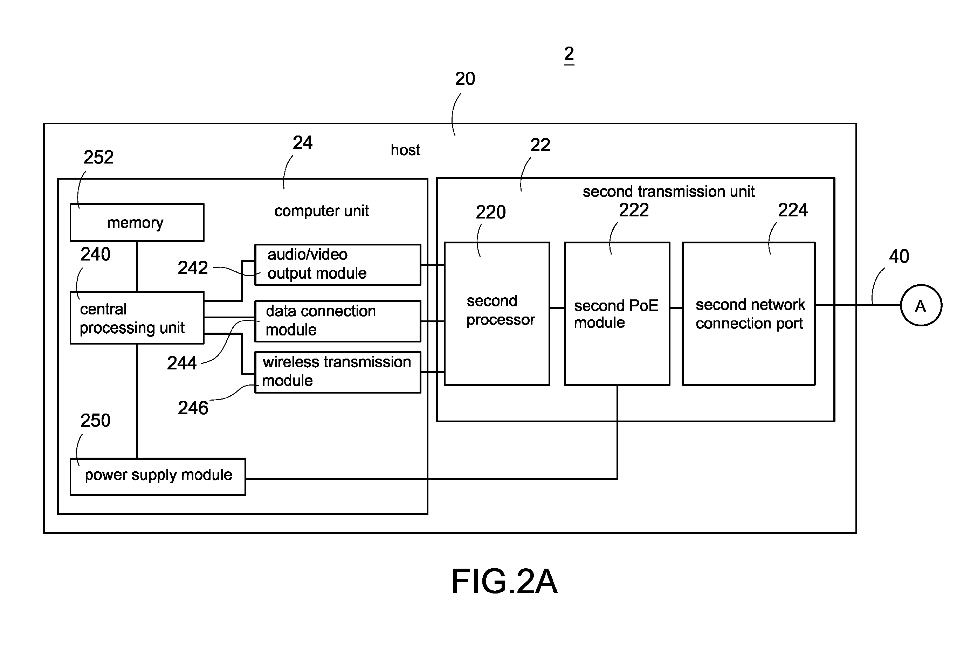

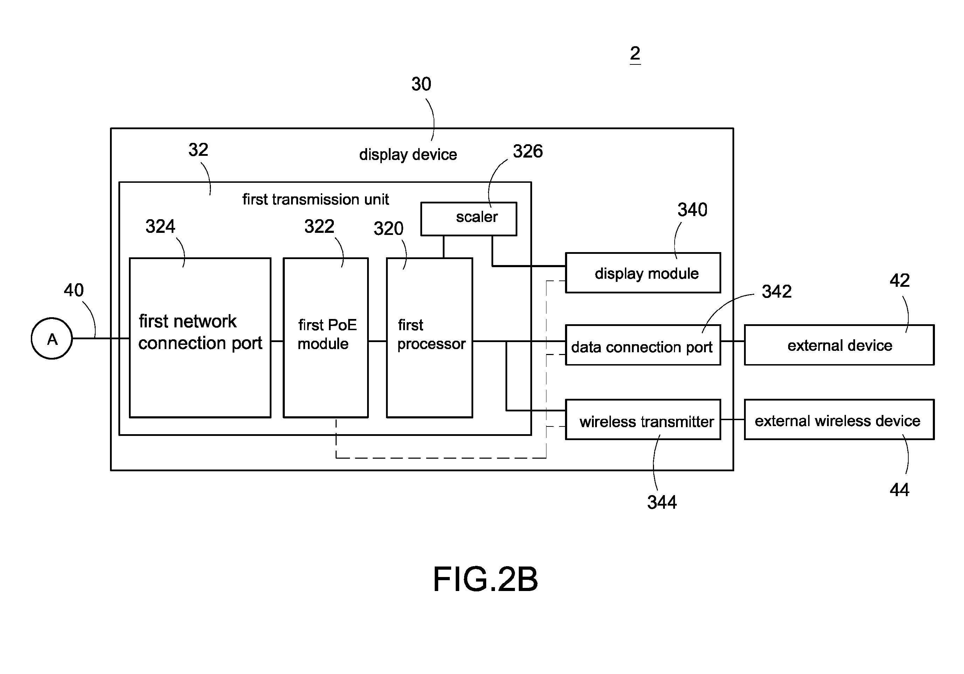

Fig. 2A is a first architecture diagram of a display system of a first embodiment according to the present invention. Fig. 2B is a second architecture diagram of a display system of a first embodiment according to the present invention. As shown in Fig. 2, the display system 2 of this embodiment mainly comprises a host 20 and a display device30. The display device 30 mainly comprises a first transmission unit 32 and a display module 340. The host 20 mainly comprises a computer unit 24 and a second transmission unit 22. The first transmission unit 32 can connect to the second transmission unit 22 via a network cable 40. Preferably, the network cable 40 can be a CAT5 cable (category 5 cable), a CAT5e cable (category 5e cable), a CAT6 cable (category 6 cable) or a CAT6a cable (category 6a cable), but not intended to limit the scope of the present invention.

The second transmission unit 22 comprises a second processor 220, a second PoE module 222 and a second network connection port 224. The computer unit 24 mainly comprises a central processing unit 240, a memory 252, a power supply module 250 and an audio/video output module 242.

The power supply module 250 electrically connected to the central processing unit 240 and the second PoE module 222 is used to provide a necessary power for making the host 20 operate. Particularly, The power supply module 250 can externally connect to the utility power (not shown in Fig. ??) to receive a power. After the received power is processed (such as filtering process, voltage-steadying process, voltage-reducing process, current-adjusting process or electric power-adjusting processing), the power supply module 250 provides the processed power to the host 20 for making the host 20 operate. Furthermore, the power supply module 250 processes and transfers the power to the second PoE module 222 for providing a necessary power for making the display device 30 operate (described later).

The memory 252 electrically connected to the central processing unit 240 is uesd to store a data. The central processing unit 240 electrically connected to the audio/video output module 242 generates an audio/video data to be playbacked on the display device 30, transforms the audio/video data into a first format data, and transfers the first format data to the second processor 220 via the audio/video output module electrically connected to the second processor 220.

Preferably, the first format data complies with a data format standard of the type of the connection port corresponding to the first format data. For example, if the host 20 and the display device 30 comprise an HDMI connection port, the first format data complies with the data format standard. In this embodiment, the first format data complies with the HDMI data format standard, but not intended to limit the scope of the present invention.

In another embodiment of the present invention, the first format data complies with the other audio/video data format standard, such as VGA (Video Graphics Array) standard, DVI (Digital Visual Interface) standard, DisplayPort standard or S-Video standard.

In this embodiment, the computer unit 24 comprises the central processing unit 240, the memory 252, the power supply 250 and the audio/video output module 242, but not intended to limit the scope of the present invention.

The main object of the computer unit 24 is generating and providing the first format data and the power to the second transmission unit 22. Under the premise of achieving above object, the people having the ordinary skill in the art of the present invention can arbitrarily replace the element using to constitute the computer unit 24 according to the request.

The elements of the second transmission unit 22 will be described in detail in following description. The second processor 220 electrically connected to the second PoE module 222 is used to encapsulate the first format data received from the audio/video output module into at least one Ethernet frame.

Particularly, the second processor 220 first encapsulates the first format data into at least one packet, and encapsulates the packet(s) into at least one Ethernet frame. Then, the second processor 220 transfers the Ethernet frame to the second PoE module 222 for transferring the Ethernet frame to the display device 30 (described later).

The present invention encapsulates the audio/video data (which can only be transferred via the transmittion cable complying with a special standard) into the Ethernet frame transferrable via the network cable 40, thus achieving the technical effect of transferring the audio/video data via the network cable 40being transferred.

It should be noticed that, the network cable (such as a variety of the twist-pair cables) has the advantage of cheaper unit cost and longer effective transmission distance (the effective transmission distance of the network cable is 100 meters or more) than that of the transmission cable complying with the other standard (such as HDMI transmission cable or DisplayPort transmission cable).

The second PoE module 222 generates an Ethernet power according to the received power from the power supply module 250, and receives the Ethernet frame from the second processor 220. The second PoE module 222 electrically connected to the second network connection port 224 transfers the Ethernet power and the Ethernet frame to the display device 30 via the second network connection port 224 and the network cable 40.

Particularly, the Ethernet power is DC power. The second PoE module 222 transfers the Ethernet frame and the Ethernet power to the display device 30 via the second network connection port 224 and the network cable 40 according to the IEEE 802.3af standard or the IEEE 802.3at standard. Preferably, the second network connection port 224 is an RJ45 connection port comprising 8P8C (8 position 8 contact), but not intended to limit the scope of the present invention. The people has the ordinary skill in the art of the present invention can arbitrary replace the network connection port standard or change the number of the twist-pair cables (such as RJ41 or 10P10C).

The host 20 of the present invention can be a PSE (power sourcing equipment) providing the Ethernet power to a PD (powered device) (in this embodiment, the PD is the display device 30) via the network cable 40 in the PoE (Power over Ethernet) architecture. Therefore, the PD can directly receive the necessary power for making itself operate without connecting the external power supply.

The elements of the display device 30 will be described in detail in following description. The first transmission unit 32 comprises a first network connection port 324, a first PoE module 322 and first processor320.

The first network connection port 324 is used to connect to the network cable 40 to receive the Ethernet frame and the Ethernet power. Preferably, the first network connection port 324 is RJ45 8P8C connection port, but not intended to limit the scope of the present invention. The people having the ordinary skill in the art of the present invention can arbitrarily replace the network connection port standard or change the number of the twist-pair cables (such as RJ41 or 10P10C).

The first PoE module 322 electrically connected to the first network connection port 324, the first processor 320 and the display module 340 is used to transfer the Ethernet frame to the first processor 320 and process the Ethernet power to provide the necessary power for making the display device (30) operate. Particularly, the first PoE module 322 receives and processes (such as adjusting the current, adjusting the voltage or adjusting the electric power) the Ethernet power, and provides the processed Ethernet power to the other elements of the display device 30 as a necessary power for making the elements operate via the power line (the dotted line shown in Fig. 2B) according to the IEEE 802.3af standard or the IEEE 802.3at standard.

The first processor 320 electrically connected to the display module 340 is used to decapsulate the received Ethernet frame from the first PoE module 322 for obtaining the first format data and transfers the first format data to the display module 340 for displaying.

Particularly, the first processor 320 first decapsulates the Ethernet frame into the packet, decapsulates the packet into the first format data, and transfers the first format data to the display module 340 for displaying.

The present invention decapsulates the Ethernet frame (which can only be transferred via the transmittion cable complying with a special standard) into the audio/video data transferrable via the network cable 40, thus achieving the technical effect of receiveing the audio/video data via the network cable 40 being transferred.

In another embodiments of the present invention, the first transmission unit 32 further comprises a scaler 326 electrically connected to the first processor 320 and the display module 340 is used to transform the first format data (such as a data format standard of HDMI) into a display format data corresponding to a display format of the display module (340). For example, if the display module (340) is a display panel supporting the LVDS (Low-voltage differential signaling) standard, the display format data must to comply with the LVDS data format standard. Furthermore, the scaler 326 can adjust the resolution, the picture quality or the colors of the first format data, and transform the first format data into the display format data corresponding to a display format of the display module 340.

In another embodiment of the present invention, the computer unit 24 of the host 20 further comprises a data connection module 244 electrically connected to the central processing unit 240 and the second processor 220. The display device 30 further comprises a data connection port 342 electrically connected to the first processor 320 and the first PoE module 322. The data connection port 342 is used to removably connect to an external device 42 (such as an USB flash drive, a smart card reader or a printer).

After the external device 42 connects to the data connection port 342 of the display device 30, the central processing unit 240 of the host 20 can generate an external device control command (such as a reading/writing command or a printing command), transform the external device control command into a second format data, and transfer the second format data to the second processor 220 via the data connection module 244. The second processor 220 encapsulates the second format data into the Ethernet frame and transfers the Ethernet frame to the display device 30 via the second network connection port 224 and the network cable 40.

The first PoE module 322 of the display device 30 transfers the Ethernet frame received via the first network connection port 324 to the first processor 320. The first processor 320 decapsulates the Ethernet frame into the second format data, and transfers the second format data to the external device 42 via the data connection port 342.

Furthermore, the first processor 320 can receive a second format reply data from the external device 42 via the data connection port 342, encapsulate the second format reply data into a data reply Ethernet frame, and transfers the data reply Ethernet frame to the host 20 via the first network connection port and the network cable 40.

Thus, the central processing unit 240 of the host 20 can control or operate the external device 42 connected to the data connection port 342 of the display device 30 via the network cable 40, and achieve the technical effect as the external device 42 directly connects to the data connection module 244 of the host 20.

Preferably,the data connection module 244 and the data connection port 342 are an USB connection port or a UART (Universal Asynchronous Receiver/Transmitter) connection port. The second format data and the second format reply data comply with the USB data format standard or the UART data format standard.

In another embodiment of the present invention, the computer unit 24 of the host 20 further comprises a wireless transmission module 246 electrically connected to the central processing unit 240 and the second processor 220. The display device 30 further comprises a wireless transmitter 344 electrically connected to the first processor 320 and the first PoE module 322, the wireless transmitter 344 is used to wirelessly connect to an external wireless device 44.

After the wireless transmitter 344 wirelessly connects to the external wireless device 44, the central processing unit 240 of the host 20 can generate a third format data, and transfer the third format data to the second processor 220 via the wireless transmission module. The second processor 220 encapsulates the third format data into the Ethernet frame and transfers the Ethernet frame to the display device 30 via the second network connection port 224 and the network cable 40.

The first PoE module 322 of the display device 30 transfers the Ethernet frame received via the first network connection port 324 to the first processor 320. The first processor 320 decapsulates the Ethernet frame into the third format data, and transfers the third format data to the external wireless device 44 via the wireless transmitter 344.

Furthermore, the first processor 320 can receive a third format reply data from the external wireless device 44 via the wireless transmitter 344, encapsulate the third format reply data into a wireless reply Ethernet frame, and transfers the wireless reply Ethernet frame to the host 20 via the first network connection port and the network cable 40.

The second PoE module 222 of the host 20 receives the wireless reply Ethernet frame via the second network connection port 224 and the network cable 40, and transfers the received wireless reply Ethernet frame to the second processor 220. The second processor 220 decapsulates the received wireless reply Ethernet frame into the third format reply data, and transfers the third format reply data to the central processing unit 240 via the wireless transmission module 246 for processing.

Thus, the central processing unit 240 of the host 20 can communicate with the external wireless device 44 wirelessly connected to the wireless transmitter 344 of the display device 30 via the network cable 40, and achieve the technical effect as the external wireless device 44 directly wirelessly connects to the wireless transmission module 246 of the host 20.

Preferably, the wireless transmitter 344 complies with the IrDA (Infrared Data Association) standard, the NFC (Near Field Communication) standard, or the RFID (Radio Frequency Identification) standard; the third format data and the third format reply data comply with the IrDA data format standard, the NFC data format standard or the RFID data format standard.

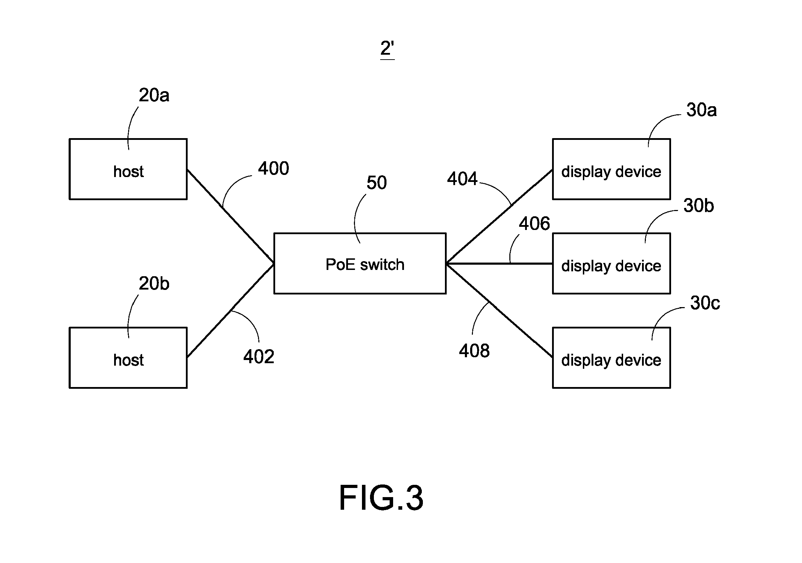

Fig. 3 is an architecture diagram of a display system of a second embodiment according to the present invention. As shown in Fig. 3, the display system 2' comprises a plurality of hosts 20a-20b, a POE switch 50 and a plurality of display devices 30a-30c. the architectures of the hosts 20a-20b and the display devices 30a-30c is similar to the architectures of the host 20 and the display device 30 respectively, the relevant description is omitted for brevity.

The PoE switch 50 comprises a switch module and a PoE relay Module (not shown in Fig.). The switch module is used to make the display devices 30a-30c correspond to the host 20a or the host 20b (in this embodiment, the display devices 30a-30b correspond to the host 20a; the display device 30c correspond to the host 20b). Therefore, the host 20a can provide the Ethernet power to the display device 30a-30b, and control the display device 30a-30b; the host 20b can provide the Ethernet power to the display device 30c, and control the display device 30c.

Particularly, the host 20a can transfer the Ethernet frame and the Ethernet power to the display device 30a via the network cable 400 and the network cable 404, or transfer the Ethernet frame and the Ethernet power to the display device 30b via the network cable 400 and the network cable 406. The host 20b can transfer the Ethernet frame and the Ethernet power to the display device 30c via the network cable 402 and the network cable 408.

Furthermore, the switch module can enhance the signals transferred via the network cables 400-408. Thus, the maximum installation distance between the hosts 20a-20b and the display device 30a-30c can be dramatically increased.

The PoE relay Module can increase the voltage or the electric power of the Ethernet power. Therefore, the present invention can prevent the Ethernet power from failing to make the display devices 30a-30c operate, where the power attenuation of the Ethernet power is caused by excessive transmission distance between the hosts 20a-20b and the display 30a-30c.

Comparing to the related art transmitting the data via the transmission cable with a short transmission distance and an expensive cost, the present invention can effectively decrease the cost of the cable and increase the maximum installing distance between the host and the display device via transmitting the data via the network cable.

The present invention can make the display device directly receive the necessary power for making the display device operate from the network cable without connecting the external power source.

The present invention can simultaneously transfer the data comprising the different formats from the host to the display device via only the network cable, and effectively simplify the number of connection cable.

As the skilled person will appreciate, various changes and modifications can be made to the described embodiment. It is intended to include all such variations, modifications and equivalents which fall within the scope of the present invention, as defined in the accompanying claims.

## Claims

1. A display device (30) comprising :
a display module (340); and
a first transmission unit (32) comprising :
a first network connection port (324) connected to a network cable (40) to receive at least one Ethernet frame and an Ethernet power;
a first PoE module (322) electrically connected to the data connection port (324), the first PoE module (322) receiving and processing the Ethernet power to provide a necessary power for making the display device (30) operate; and
a first processor (320) electrically connected to the first PoE module (322) and the display module (340) receiving and decapsulating the Ethernet frame into a first format data, and transferring the first format data to the display module (340) for displaying.

2. The display device (30) in claim 1, wherein the first transmission unit (32) further comprises a scaler (326) electrically connected to the first processor (320) and the display module (340) transforming the first format data into a display format data corresponding to the display format of the display module (340), and transferring the display format data to the display module (340) for displaying.

3. The display device (30) in claims 1 or 2, wherein the first format data complies with a HDMI data format standard; the display format data complies with a LVDS data format standard; the display module (340) is a display panel supporting the LVDS standard.

4. The display device (30) in any of the claims 1 to 3, wherein the display device (30) further comprises at least one data connection port (342) electrically connected to the first PoE module (322) and the first processor (320) for removably connecting to an external device (42), the data connection port (342) receives a necessary power for making the display device (30) operate from the first PoE module (322), the data connection port (342) receives a second format data generated by decapsulating the Ethernet frame from the first processor (320) and transfers the second format data to the external device (42), the first processor (320) encapsulates a second format reply data received from the data connection port (342) into a data reply Ethernet frame and transfers the data reply Ethernet frame to outside via the first network connection port (324) and the network cable (40).

5. The display device (30) in any of the claims 1 to 4, wherein the data connection port (342) is a USB connection port; the second format data and the second format reply data comply with a USB data format standard.

6. The display device (30) in any of the claims 1 to 5, wherein the data connection port (342) is a UART connection port; the second format data and the second format reply data comply with a UART data format standard.

7. The display device (30) in any of the claims 1 to 6, wherein the display device (30) further comprises wireless a wireless transmitter (344) electrically connected to the first PoE module (322) and the first processor (320) for wirelessly connecting to an external wireless device (44), the wireless transmitter (344) receives a necessary power for making itself operate from the first PoE module (322), the wireless transmitter (344) receives a third format data generated by decapsulating the Ethernet frame from the first processor (320) and transfers the third format data to the external wireless device (44), the first processor (320)
encapsulates a third format reply data received from the wireless transmitter (344) into a wireless reply Ethernet frame and transfers the wireless reply Ethernet frame to outside via the first network connection port (324) and the network cable (40).

8. The display device (30) in any of the claims 1 to 7, wherein the wireless transmitter (344) complies with the IrDA standard; the third format data and the third format reply data comply with a IrDA data format standard; the first network connection port (324) is a RJ45 network connection port.

9. A display system (2) comprising:
a display device (30) comprising:
a display module (340);
a first transmission unit (32) comprising :
a first network connection port (324) connected to a network cable (40) to receive at least one Ethernet frame and an Ethernet power;
a first PoE module (322) electrically connected to the data connection port (324), the first PoE module (322) receiving and processing the Ethernet power to provide a necessary power for making the display device (30) operate; and
a first processor (320) electrically connected to the first PoE module (322) and the display module (340) receiving and decapsulating the Ethernet frame into a first format data, and transferring the first format data to the display module (340) for displaying; and
a host (20) comprising:
a computer unit (24) comprising:
an audio/video output module (242) outputting the first format data;
a central processing unit (240) electrically connected to the audio/video output module (242) generating the first format data; and
a power supply module (250) electrically connected to the central processing unit (240) providing a power; and
a second transmission unit (22) comprising:
a second processor (220) electrically connected to the audio/video output module (242) encapsulating the first format data into the Ethernet frame;
a second network connection port (224) connecting the network cable (40) to transfer the Ethernet frame and the Ethernet power; and
a second PoE module (222) electrically connected to second processor (220), the second network connection port (224) and the power supply module (250) generating the Ethernet power, and transferring the Ethernet frame and the Ethernet power to the display device (30) via the second network connection port (224) and the network cable (40).

10. The display system (2) in claim 9, wherein the first transmission unit (32) further comprises a scaler (326) electrically connected to the first processor (320) and the display module (340) for transforming the first format data into a display format data corresponding to a display format of the display module (340), and transferring the display format data to the display module (340) for displaying.

11. The display system (2) in claims 9 or 10, wherein the display device (30) further comprises at least one data connection port (342) electrically connected to the first PoE module (322) and the first processor (320) for removably connecting to an external device (42), the data connection port (342) receives a necessary power for making the display device (30) operate from the first PoE module (322), the data connection port (342) receives a second format data generated by decapsulating the Ethernet frame from the first processor (320) and transfers the second format data to the external device (42), the first processor (320) encapsulates a second format reply data received from the data connection port (342) into a data reply Ethernet frame and transfers the data reply Ethernet frame to outside via the first network connection port (324) and the network cable (40); the computer unit (24) further comprises a data connection module (244) electrically connected to the central processing unit (240) and the second processor (220) for outputting the second format data and receiving the second format reply data; the second processor (220) receives the data reply Ethernet frame; the second PoE module (222) transfers the data reply Ethernet frame to the second processor (220); the second processor (220) encapsulates the second format data into the Ethernet frame, decapsulates the data reply Ethernet frame into the second format reply data, and transfers the second format reply data to the central processing unit (240) via the data connection module (244); the central processing unit (240) generates the second format data and processes the second format reply data.

12. The display system (2) in any of the claims 9 to 11, wherein the display device (30) further comprises wireless a wireless transmitter (344) electrically connected to the first PoE module (322) and the first processor (320) for wirelessly connecting to an external wireless device (44), the wireless transmitter (344) receives a necessary power for making itself operate from the first PoE module (322), the wireless transmitter (344) receives a third format data generated by decapsulating the Ethernet frame from the first processor (320) and transfers the third format data to the external wireless device (44), the first processor (320)
encapsulates a third format reply data received from the wireless transmitter (344) into a wireless reply Ethernet frame and transfers the wireless reply Ethernet frame to outside via the first network connection port (324) and the network cable (40); the computer unit (24) further comprises a wireless transmission module (246) electrically connected to the central processing unit (240) and the second processor (220) for outputting the third format data and receiving the third format reply data; the second network connection port (224) transfers the wireless reply Ethernet frame; the second PoE module (222) transfers the wireless reply Ethernet frame to the second processor (220); the second processor (220) encapsulates the third format data into the Ethernet frame, decapsulates the wireless reply Ethernet frame into the third format reply data, and transfers the third format reply data to the central processing unit (240) via the wireless transmission module; the central processing unit (240) generates the third format data and processes the third format reply data.

13. The display system (2) in any of the claims 9 to 12, wherein the first format data complies with a HDMI data format standard; the data connection port (342) is a USB connection port or a UART connection port; the second format data and the second format reply data comply with an USB data format standard or an UART data format standard.

14. The display system (2) in any of the claims 9 to 13, wherein the display format data complies with a LVDS data format standard; the display module (340) is a display panel supporting the LVDS standard; the first network connection port (324) and the second network connection port (224) are a RJ45 network connection port.

15. The display system (2) in any of the claims 9 to 14, wherein the wireless transmitter (344) complies with the IrDA standard; the third format data and the third format reply data comply with a data format standard of IrDA.

## Amended claims

### Amended claims in accordance with Rule 137(2) EPC.

1. A display system (2') comprising:
a PoE switch (50);
a plurality of display devices (30a-30c), and each display device (30a-30c) respectively comprising:
a display module (340);
a first transmission unit (32) comprising :
a first network connection port (324) connected to the PoE switch (50) to receive at least one Ethernet frame and an Ethernet power via a first network cable (404-408);
a first PoE module (322) electrically connected to the first network connection port (324), the first PoE module (322) receiving and processing the Ethernet power transferred from the PoE switch (50) to provide a necessary power for making the display device (30a-30c) to operate; and
a first processor (320) electrically connected to the first PoE module (322) and the display module (340), the first processor (320) receiving and decapsulating the Ethernet frame into a first format data, and transferring the first format data to the display module (340) for displaying; and
a plurality of hosts (20a, 20b), and each host (20a, 20b) respectively comprising:
a computer unit (24) comprising:
an audio/video output module (242) outputting the first format data;
a central processing unit (240) electrically connected to the audio/video output module (242) generating the first format data; and
a power supply module (250) electrically connected to the central processing unit (240) providing a power; and
a second transmission unit (22) comprising:
a second processor (220) electrically connected to the audio/video output module (242) encapsulating the first format data into the Ethernet frame;
a second network connection port (224) connecting the PoE switch (50) via a second network cable (400-402); and
a second PoE module (222) electrically connected to the second processor (220), the second network connection port (224) and the power supply module (250), the second PoE module (222) generating the Ethernet power based on the power of the power supply module (250), and simultaneously transferring the Ethernet frame and the Ethernet power to the corresponded display device (30a-30c) via the second network connection port (224), the second network cable (400-402), the PoE switch (50) and the first network cable (404-408),
wherein the PoE switch (50) simultaneously receives the signals of the Ethernet frame and the Ethernet power from the host (20a, 20b), enhances the received signals of the Ethernet frame, increases the voltage or the electric power of the received Ethernet power, and simultaneously transfers the enhanced signals of the Ethernet frame and the Ethernet power to the corresponded display device (30a-30c).

2. The display system (2') in claim 1, wherein the first transmission unit (32) further comprises a scaler (326) electrically connected to the first processor (320) and the display module (340) for transforming the first format data into a display format data corresponding to a display format of the display module (340), and transferring the display format data to the display module (340) for displaying.

3. The display system (2') in claim 1 or 2, wherein the display device (30a-30c) further comprises at least one data connection port (342) electrically connected to the first PoE module (322) and the first processor (320) for removably connecting to an external device (42), the data connection port (342) receives a necessary power for making the display device (30a-30c) operate from the first PoE module (322), the data connection port (342) receives a second format data generated by decapsulating the Ethernet frame from the first processor (320) and transfers the second format data to the external device (42), the first processor (320) encapsulates a second format reply data received from the data connection port (342) into a data reply Ethernet frame and transfers the data reply Ethernet frame to outside via the first network connection port (324) and the first network cable (400-402); the PoE switch (50) receives the signals of the data reply Ethernet frame from the display device (30a,30c), enhances the received signals of the data relay Ethernet frame, and transfers the enhanced signals of the data relay Ethernet frame to the corresponded host (20a,20b); the computer unit (24) of the host (20a, 20b) further comprises a data connection module (244) electrically connected to the central processing unit (240) and the second processor (220) for outputting the second format data and receiving the second format reply data; the second processor (220) receives the data reply Ethernet frame; the second PoE module (222) transfers the data reply Ethernet frame to the second processor (220); the second processor (220) encapsulates the second format data into the Ethernet frame, decapsulates the data reply Ethernet frame into the second format reply data, and transfers the second format reply data to the central processing unit (240) via the data connection module (244); the central processing unit (240) generates the second format data and processes the second format reply data.

4. The display system (2') in any of the claims 1 to 3, wherein the display device (30a-30c) further comprises a wireless transmitter (344) electrically connected to the first PoE module (322) and the first processor (320) for wirelessly connecting to an external wireless device (44), the wireless transmitter (344) receives a necessary power for making itself operate from the first PoE module (322), the wireless transmitter (344) receives a third format data generated by decapsulating the Ethernet frame from the first processor (320) and transfers the third format data to the external wireless device (44), the first processor (320)
encapsulates a third format reply data received from the wireless transmitter (344) into a wireless reply Ethernet frame and transfers the wireless reply Ethernet frame to outside via the first network connection port (324) and the second network cable (404-408); the PoE switch (50) receives the signals of the wireless reply Ethernet frame from the display device (30a,30c), enhances the received signals of the wireless reply Ethernet frame, and transfers the enhanced signals of the wireless reply Ethernet frame to the corresponded host (20a,20b); the computer unit (24) of the host (20a, 20b) further comprises a wireless transmission module (246) electrically connected to the central processing unit (240) and the second processor (220) for outputting the third format data and receiving the third format reply data; the second network connection port (224) transfers the wireless reply Ethernet frame; the second PoE module (222) transfers the wireless reply Ethernet frame to the second processor (220); the second processor (220) encapsulates the third format data into the Ethernet frame, decapsulates the wireless reply Ethernet frame into the third format reply data, and transfers the third format reply data to the central processing unit (240) via the wireless transmission module; the central processing unit (240) generates the third format data and processes the third format reply data.

5. The display system (2') in any of the claims 1 to 4, wherein the first format data complies with a HDMI data format standard; the data connection port (342) is a USB connection port or a UART connection port; the second format data and the second format reply data comply with an USB data format standard or an UART data format standard.

6. The display system (2') in any of the claims 1 to 5, wherein the display format data complies with a LVDS data format standard; the display module (340) is a display panel supporting the LVDS standard; the first network connection port (324) and the second network connection port (224) are a RJ45 network connection port.

7. The display system (2') in any of the claims 1 to 6, wherein the wireless transmitter (344) complies with the IrDA standard; the third format data and the third format reply data comply with a data format standard of IrDA.
